(19) Europäisches Patentamt
European Patent Office
Office européen des brevets

(11) **EP 4 674 254 A1**

(12) **EUROPEAN PATENT APPLICATION**
published in accordance with Art. 153(4) EPC

(43) Date of publication:
**07.01.2026 Bulletin 2026/02**

(21) Application number: **23925405.5**

(22) Date of filing: **11.12.2023**

(51) International Patent Classification (IPC):
**A01G 9/14** (2006.01)    **G06Q 50/02** (2024.01)

(52) Cooperative Patent Classification (CPC):
**A01G 9/14; G06Q 50/02**

(86) International application number:
**PCT/JP2023/044183**

(87) International publication number:
**WO 2024/180853 (06.09.2024 Gazette 2024/36)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **28.02.2023 JP 2023029299**

(71) Applicant: **Seiwa Company, Limited
Shimotsuke-shi, Tochigi 329-0412 (JP)**

(72) Inventors:
• **NIIMURA Subaru
Shimotsuke-shi, Tochigi 329-0412 (JP)**
• **ODE Hironobu
Shimotsuke-shi, Tochigi 329-0412 (JP)**

(74) Representative: **Hoffmann Eitle
Patent- und Rechtsanwälte PartmbB
Arabellastraße 30
81925 München (DE)**

(54) **AGRICULTURAL HOUSE DESIGN ASSISTANCE DEVICE, COMPUTER PROGRAM, AND RECORDING MEDIUM**

(57)    The thermal energy emitted from various devices and facilities is recovered, and the construction of a greenhouse in a size corresponding to effectively using recovered heat is promoted.

There are included: a recovered heat quantity acquisition unit 11 which acquires a heat quantity of recovered heat capable of being recovered and used, in thermal energy emitted from various devices and facilities; a basic design information acquisition unit 12 which acquires basic design information of the greenhouse; an overall heat transfer coefficient calculation unit 13 which finds an overall heat transfer coefficient of the greenhouse; and a floor-area theoretical-value calculation unit 14 which calculates a theoretical value of a floor area of the greenhouse capable of securing heating capability maintaining a set night temperature suitable for a plant, in consideration of the overall heat transfer coefficient, to the heat quantity of the recovered heat.

FIG. 1

1: GREENHOUSE DESIGN SUPPORT APPARATUS

## Description

Technical Field

The present invention relates to a technique of supporting design of a greenhouse, and particularly relates to a technique of supporting design of a greenhouse using thermal energy emitted from various devices and facilities.

Background Art

Various countermeasures against global warming are being studied as a pressing issue. In particular, a reduction in greenhouse effect gas in power stations, substations, factories, incineration plants, and the like which emit the greenhouse effect gas such as carbon dioxide can be expected to have a great effect on the countermeasures against global warming.

Patent Document 1 discloses a technique in which heat exhaust air containing a large amount of carbon dioxide of thermal power stations is not emitted to the air, and heat exchange to cause a drop to a predetermined temperature by using seawater is performed, and this heat exhaust air containing carbon dioxide is supplied to a plant factory to inhibit the emission to the air of the greenhouse effect gas.

Non-Patent Document 1 discloses, as one of global warming prevention techniques, a technique of supplying heat generated by combustion of gas or the like to a greenhouse to provide heating, and taking out carbon dioxide from an exhaust gas and supplying it to promote growth of plants.

Prior Art Document

Patent Document

Patent Document 1: Japanese Patent Application Laid-open No. 3-236723

Non-Patent Document

Non-Patent Document 1: ene-fro, ENERGY FRONTLINE, April 13th, 2021, Vol. 25, "Tomato grows more and more rapidly with CO2! What is the latest technology of killing three birds with one stone?" URL: https://ene-fro.com/article/ef195_a1/

Summary of the Invention

Problems to Be Solved by the Invention

The techniques disclosed in Patent Document 1 and Non-Patent Document 1 are techniques of basically inhibiting an emission amount of a greenhouse effect gas into the air by recovering carbon dioxide and heat emitted from energy emission facilities and using them for other uses. Between these, most of thermal energy of exhaust heat is heat derived from fossil fuels, and a use amount of the fossil fuels can be reduced by promoting its use, which leads to energy saving and a reduction in greenhouse effect gas emission amount.

However, the above-described conventional techniques have findings of the use itself of the thermal energy of the exhaust heat, but a sufficient study of more efficient use of the thermal energy in a greenhouse has not been made.

Actually, it is the present situation that the evaluation in which the exhaust heat or the like of factories or the like is used by being supplied to the existing greenhouse, which allows a contribution to the energy saving and the reduction in greenhouse effect gas is made alone. Even though the greenhouse is constructed for the use of the exhaust heat or the like from the factories or the like, the greenhouse is not constructed in a size corresponding to efficiently using the thermal energy of the exhaust heat, and simply, the greenhouse in a size determined in advance is constructed alone under the present situation. Accordingly, if the size of the greenhouse can be made to correspond to thermal energy capable of being recovered and used, a cost, labor, and the like accompanying the construction of the greenhouse become more reasonable. As a result, the construction of a greenhouse capable of using the exhaust heat is promoted, which also enhances an inhibition effect of the greenhouse effect gas emission amount.

The present invention was made in consideration of the above, and has an object to provide a greenhouse design support apparatus which recovers thermal energy emitted from various devices and facilities to allow construction of a greenhouse in a size corresponding to effectively using recovered heat, and inhibits waste of a construction cost or the like to promote the construction of the greenhouse, which allows contribution to the reduction in greenhouse effect gas, and to provide a computer program and a recording medium.

Means for Solving the Problems

To solve the above problems, a greenhouse design support apparatus of the present invention, which supports design of a greenhouse scheduled to be installed in a predetermined region, the greenhouse design support apparatus includes:

a recovered heat quantity acquisition unit which acquires a heat quantity of recovered heat capable of being recovered and used, in thermal energy emitted from various devices and facilities;
a basic design information acquisition unit which acquires basic design information of the greenhouse;
an overall heat transfer coefficient calculation unit which finds an overall heat transfer coefficient of the greenhouse in a case of cultivating a predetermined plant during a predetermined cultivation period, in the greenhouse provided with the basic design information; and
a floor-area theoretical-value calculation unit which calculates a theoretical value of a floor area of the greenhouse capable of securing heating capability maintaining a set night temperature suitable for the plant, in consideration of the overall heat transfer coefficient, to the heat quantity of the recovered heat.

Preferably, as the overall heat transfer coefficient, at least one of a horizontal overall heat transfer coefficient and a vertical overall heat transfer coefficient of the greenhouse is used.

Preferably, the overall heat transfer coefficient calculation unit includes an inside-outside air temperature difference calculation unit which finds an inside-outside air temperature difference between the set night temperature and a regional minimum air temperature in the region which is estimated during the cultivation period, in the case of cultivating the plant during the cultivation period, and
the horizontal overall heat transfer coefficient and the vertical overall heat transfer coefficient are found in consideration of the inside-outside air temperature difference.

Preferably, the overall heat transfer coefficient calculation unit includes a soil heat flux calculation unit which calculates a soil heat flux in the region during the cultivation period, and
the vertical overall heat transfer coefficient is calculated based on the soil heat flux.

Preferably, the floor-area theoretical-value calculation unit calculates the theoretical value of the floor area by being assumed to be a quadrangular floor shape.

Preferably, the greenhouse design support apparatus includes a coverage-area theoretical-value calculation unit which calculates a theoretical value of a coverage area of the greenhouse capable of using the recovered heat found by the recovered heat quantity acquisition unit at a desired efficiency, based on the theoretical value of the floor area, the inside-outside air temperature difference, the soil heat flux, and the basic design information.

Preferably, the greenhouse design support apparatus includes a floor-area design-value calculation unit which finds design values of a total width and a depth of the greenhouse so that a design value of the floor area of the greenhouse is equal to or less than the theoretical value of the floor area.

Preferably, the greenhouse design support apparatus includes: a floor-area design-value calculation unit which finds design values of a width and a depth of the greenhouse so that a design value of the floor area of the greenhouse is equal to or less than the theoretical value of the floor area; and
a coverage-area design-value calculation unit which finds a design value of the coverage area of the greenhouse at equal to or less than the theoretical value of the coverage area, based on the design value of the floor area found by the floor-area design-value calculation unit, the total width and the depth, and the basic design information acquired in the basic design information acquisition unit.

The greenhouse design support apparatus includes a required heat quantity calculation unit which calculates a required heat quantity for securing a set night temperature in the greenhouse,

Preferably, the required heat quantity calculation unit is a means of calculating, as the required heat quantity, a periodic heat load during the predetermined cultivation period which is calculated using a daily nighttime heating load found in consideration of the design value of the floor area and the design value of the coverage area, to a daily maximum air temperature and a daily minimum air temperature obtained from public weather data of an installation region of the greenhouse.

Preferably, the periodic heat load is found by adding a daily daytime heating load to the daily nighttime heating load.

Preferably, the greenhouse design support apparatus includes a heating-origin greenhouse-effect-gas emission-amount calculation unit which finds a greenhouse effect gas emission amount in a case of securing the required heat quantity by operation of heating equipment, makes a comparison with a greenhouse effect gas emission amount in a case of securing the required heat quantity by using the recovered heat, and finds a difference between the greenhouse effect gas emission amounts as a greenhouse effect gas reduction amount in a case of using the recovered heat.

Preferably, in a case of securing all the required heat quantity by using the recovered heat, a fuel consumption amount = 0 and a greenhouse effect gas emission amount = 0 are obtained.

Preferably, the greenhouse design support apparatus includes a cost calculation unit which finds a cost required until securing the required heat quantity by the operation of the heating equipment and a cost required until securing the required heat quantity by using the recovered heat individually, and finds a reduction energy cost from a difference between the costs.

Further, the present invention provides,

a computer program which causes a computer to function as a greenhouse design support apparatus which supports design of a greenhouse installed in a predetermined region, the computer program causing the computer to execute:

a procedure of acquiring a heat quantity of recovered heat capable of being recovered and used, in thermal energy emitted from various devices and facilities;
a procedure of acquiring basic design information of the greenhouse;
a procedure of finding an overall heat transfer coefficient of the greenhouse in a case of cultivating a predetermined plant during a predetermined cultivation period, in the greenhouse provided with the basic design information; and
a procedure of calculating a theoretical value of a floor area of the greenhouse capable of securing heating capability maintaining a set night temperature suitable for the plant, in consideration of the overall heat transfer coefficient, to the heat quantity of the recovered heat.

Preferably, as the overall heat transfer coefficient, at least one of a horizontal overall heat transfer coefficient and a vertical overall heat transfer coefficient of the greenhouse is used.

Preferably, in the procedure of calculating the overall heat transfer coefficient, an inside-outside air temperature difference between the set night temperature and a regional minimum air temperature in the region which is estimated during the cultivation period is found in the case of cultivating the plant during the cultivation period, and the horizontal overall heat transfer coefficient and the vertical overall heat transfer coefficient are found in consideration of the inside-outside air temperature difference.

Preferably, in the procedure of calculating the overall heat transfer coefficient, a soil heat flux in the region during the cultivation period is calculated, and the vertical overall heat transfer coefficient is calculated based on the soil heat flux.

Preferably, a theoretical value of a coverage area of the greenhouse capable of using the recovered heat at a desired efficiency is calculated based on the theoretical value of the floor area, the inside-outside air temperature difference, the soil heat flux, and the basic design information.

Preferably, design values of a total width and a depth of the greenhouse are found so that a design value of the floor area of the greenhouse is equal to or less than the theoretical value of the floor area.

Preferably, design values of a width and a depth of the greenhouse are found so that a design value of the floor area of the greenhouse is equal to or less than the theoretical value of the floor area, and a design value of the coverage area of the greenhouse is found at equal to or less than the theoretical value of the coverage area, based on the design value of the floor area, the total width and the depth, and the basic design information.

Preferably, further, a periodic heat load during the predetermined cultivation period which is calculated using a daily nighttime heating load found in consideration of the design value of the floor area and the design value of the coverage area, to a daily maximum air temperature and a daily minimum air temperature obtained from public weather data of an installation region of the greenhouse is calculated as a required heat quantity for securing a set night temperature in the greenhouse.

Preferably, the periodic heat load is found by adding a daily daytime heating load to the daily nighttime heating load.

Preferably, further, a heating-origin greenhouse effect gas emission amount in which a greenhouse effect gas emission amount in a case of securing the required heat quantity by operation of heating equipment is found, a comparison is made with a greenhouse effect gas emission amount in a case of securing the required heat quantity by using the recovered heat, and a difference between the greenhouse effect gas emission amounts is found as a greenhouse effect gas reduction amount in a case of using the recovered heat is calculated.

Preferably, further, a configuration to find a cost required until securing the required heat quantity by the operation of the heating equipment and a cost required until securing the required heat quantity by using the recovered heat individually, and find a reduction energy cost from a difference between the costs is provided.

Further, the present invention provides a computer-readable recording medium in which the computer program is recorded. The recording medium in which the computer program is stored may be a non-transitory recording medium. The non-transitory recording medium is not particularly limited, and there are cited recording mediums such as a flexible disk, a hard disk, a CD-ROM, an MO (magneto-optical disk), a DVD-ROM, and a memory card, for example.

Effect of the Invention

According to the present invention, the heat quantity of the recovered heat capable of being recovered is found in the thermal energy emitted from various devices and facilities, and from the floor area found in consideration of the overall heat transfer coefficients according to the heat flows in the horizontal direction and the vertical direction of the greenhouse, the construction of the greenhouse in the size in which the required heating capability can be secured by supply of the recovered heat becomes possible. Consequently, the greenhouse constructed based on the result obtained by the greenhouse design support apparatus of the present invention can use the recovered heat efficiently, and saves energy to allow a contribution to a reduction in greenhouse effect gas. Further, it is possible to eliminate waste such as a cost, labor, and the like accompanying the construction of the greenhouse.

Brief Description of Drawings

[FIG. 1] FIG. 1 is a block diagram illustrating a schematic configuration of a greenhouse design support apparatus according to one embodiment of the present invention.
[FIG. 2] FIG. 2 is a diagram for explaining a function of a recovered heat quantity acquisition unit.
[FIG. 3] FIG. 3 is a diagram illustrating one example of an input screen and an output screen displayed on a display.
[FIG. 4] FIG. 4 is a diagram for explaining a configuration and a function of an overall heat transfer coefficient calculation unit.
[FIG. 5] FIG. 5 is a diagram for explaining a configuration and a function of a floor-area theoretical-value calculation unit.
[FIG. 6] FIG. 6 is a diagram for explaining a configuration and a function of a coverage-area theoretical-value calculation unit.
[FIG. 7] FIG. 7 is a diagram for explaining a calculation process of a design value of a floor area in a floor-area design-value calculation unit.
[FIG. 8] FIG. 8 is a diagram for explaining a calculation process of a design value of a coverage area in a coverage-area design-value calculation unit.
[FIG. 9] FIG. 9 is a block diagram illustrating a schematic configuration of a greenhouse design support apparatus according to the other embodiment of the present invention.
[FIG. 10] FIG. 10 is a diagram for explaining a calculation process of a periodic heat load in a required heat quantity calculation unit.
[FIG. 11] FIG. 11 is a diagram for explaining a calculation process of a nighttime degree hour.
[FIG. 12] FIG. 12 is a diagram for explaining a calculation process in a case of including a daily daytime heating load in the periodic heat load.
[FIG. 13] FIG. 13 is a diagram for explaining a calculation process of a greenhouse effect gas emission amount in a heating-origin greenhouse-effect-gas emission-amount calculation unit.

Modes for Carrying out the Invention

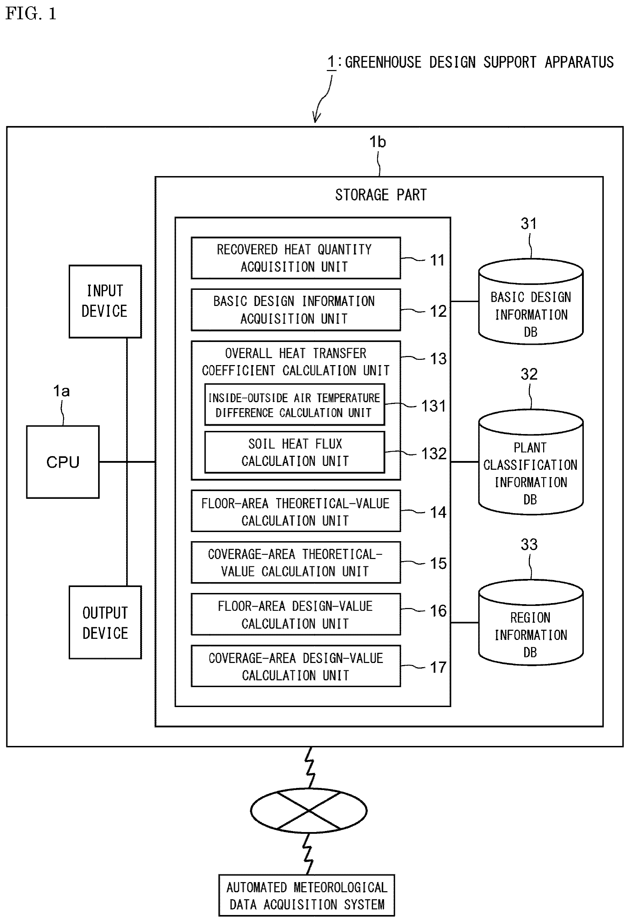

Hereinafter, based on an embodiment of the present invention illustrated in the drawings, description will be made in more detail. FIG. 1 is a diagram illustrating a schematic configuration of a greenhouse design support apparatus 1 according to this embodiment. As illustrated in this diagram, the greenhouse design support apparatus 1 of this embodiment is constituted of a computer (the kind of computer is not limited, and includes a personal computer, a microcomputer, a portable information terminal, and the like) including a processor (CPU) 1a and a storage part (a case of being referred to as "storage part" in this embodiment means including both of volatile and nonvolatile recording mediums such as main storage and storage, and neither of them is restrictive) 1b.
Specifically, in the greenhouse design support apparatus 1 of this embodiment, a computer program which executes procedures to cause the computer which is the greenhouse design support apparatus 1 to function as a recovered heat quantity acquisition unit 11, a basic design information acquisition unit 12, an overall heat transfer coefficient calculation unit 13. a floor-area theoretical-value calculation unit 14, a coverage-area theoretical-value calculation unit 15, a floor-area design-value calculation unit 16 and a coverage-area design-value calculation unit 17 is stored in the storage part 1b. The computer program is normally stored in the nonvolatile recording medium such as a hard disk or an SSD which is built in or externally attached to the computer (greenhouse design support apparatus 1), and is read and executed by the above-described processor 1a. Further, a storage location of various kinds of data may be a storage part connected via a communication line other than the storage part built in or externally attached to the greenhouse design support apparatus 1.

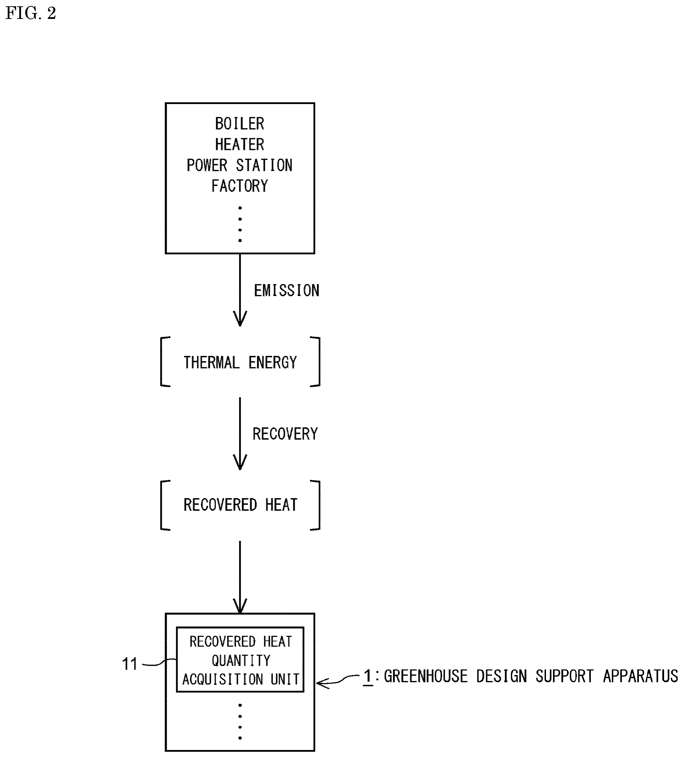

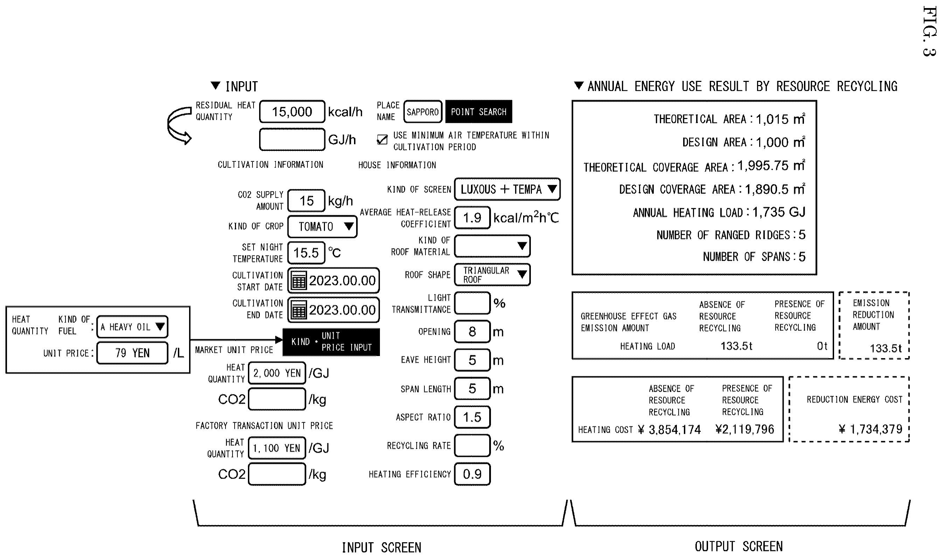

The recovered heat quantity acquisition unit 11 acquires a heat quantity of recovered heat capable of being recovered and used, in thermal energy emitted from various devices and facilities, as illustrated in FIG. 2. The various devices and facilities are not particularly limited as long as they emit thermal energy. For example, either a relatively small-sized device such as a boiler, a heater, or a carbon dioxide generator attached to the greenhouse, or the like, or, a large-sized facility or a plant such as a power station, a factory, or an incineration plant, or the like is applicable. However, the farther distance from an installation place of the greenhouse requires a larger transport cost of the thermal energy, and thus the device or the facility provided in a place near the installation place of the greenhouse is preferable. For example, in a case of providing a pipe system which recovers exhaust gas of the incineration plant, the recovered heat quantity acquisition unit 11 finds a heat quantity of recovered heat allowed to be removed from the exhaust gas obtained via the pipe system. The heat quantity of the recovered heat can also be found by measuring a heat quantity allowed to be actually recovered, and as use in simulation, an appropriate estimated value can also be used. FIG. 3 illustrates one example of a display screen of a display which is an output device, and various kinds of input information are displayed in boxes indicated with blanks on the left side of the figure. When the heat quantity of the recovered heat is input using an input device, or the information is received from a device (not illustrated) with which the heat quantity of the recovered heat has been found, the heat quantity is displayed in the box displayed as "residual heat quantity" in FIG. 3 by the recovered heat quantity acquisition unit 11. Note that when the residual heat quantity is input in a unit: kcal/h, the recovered heat quantity acquisition unit 11 also has a function of converting it to a unit: GJ/h. The recovered heat quantity acquisition unit 11 also makes a basic design information database 31 store the input heat quantity (residual heat quantity) of the recovered heat therein.

The basic design information acquisition unit 12 acquires basic design information required of design of the greenhouse. The basic design information is information regarding a structure of the greenhouse such as a roof shape (for example, such as a triangular shape or a semicircular shape, or, a pitch in a case of selecting the triangular shape, or the like), the kind of roof material (for example, such as an FRA), a frontage, an eave height (a height from an installation surface excluding a gable portion of a roof), a span length in a depth direction, an aspect ratio (total width/depth), and the kind of lining covering material (for example, such as Luxous (brand name) or Tempa (brand name)), and information regarding cultivation such as the kind of plant, and, a start date and an end date of cultivation in this embodiment. Note that the greenhouse designed in this embodiment is premised on a multi-ridge structure, and in the following description, the "frontage" means a frontage for one ridge, and the "total width" means the width of the overall greenhouse with the multi-ridge structure. When the basic design information is input using the input device by simulation executors of this apparatus such as construction planners of the greenhouse or persons concerned with the factories from which exhaust gas is emitted, the input contents are reflected in predetermined input items illustrated in FIG. 3 by the basic design information acquisition unit 12. In cases in each of which a range allowed to be adopted as the greenhouse is limited, such as the roof shape, the kind of roof material, and the span length in the depth direction, they can be configured to be selected by displaying pull-down menus. The frontage, the eave height, the aspect ratio, and the like can be configured such that numerical values are input. An input method is naturally optional, and is not limited to this. The aspect ratio is appropriately determined in consideration of a shape, an area, and the like of land on which the greenhouse is scheduled to be installed.

The basic design information acquisition unit 12 also makes the basic design information database 31 store the above-described input basic design information therein.

The overall heat transfer coefficient calculation unit 13 reads the basic design information acquired by the basic design information acquisition unit 12, and finds an overall heat transfer coefficient of the greenhouse in a case of cultivating a predetermined plant during a predetermined cultivation period. In the overall heat transfer coefficient, coefficients of heat exchange from an end face, a gable portion, and a side wall (in this embodiment, these are each referred to as a "horizontal overall heat transfer coefficient" because they are coefficients regarding heat flows in a horizontal direction) and, coefficients of heat exchange on the ground and heat exchange on a top face (in this embodiment, these are each referred to as a "vertical overall heat transfer coefficient" because they are coefficients regarding heat flows in a vertical direction) are present. In this embodiment, as the overall heat transfer coefficient, both the horizontal overall heat transfer coefficient and the vertical overall heat transfer coefficient are taken into consideration. A case of considering only either of them is insufficient as the overall heat transfer coefficient of the overall greenhouse, and because of an effect on reliability of values of calculated floor area and coverage area, both are preferably taken into consideration.

The overall heat transfer coefficient calculation unit 13 has an inside-outside air temperature difference calculation unit 131 and a soil heat flux calculation unit 132. The inside-outside air temperature difference calculation unit 131 finds an inside-outside air temperature difference between a set night temperature in the greenhouse and a regional minimum air temperature, estimated during this predetermined cultivation period, in a region where the greenhouse is scheduled to be installed, in the case of cultivating the predetermined plant during the predetermined cultivation period.

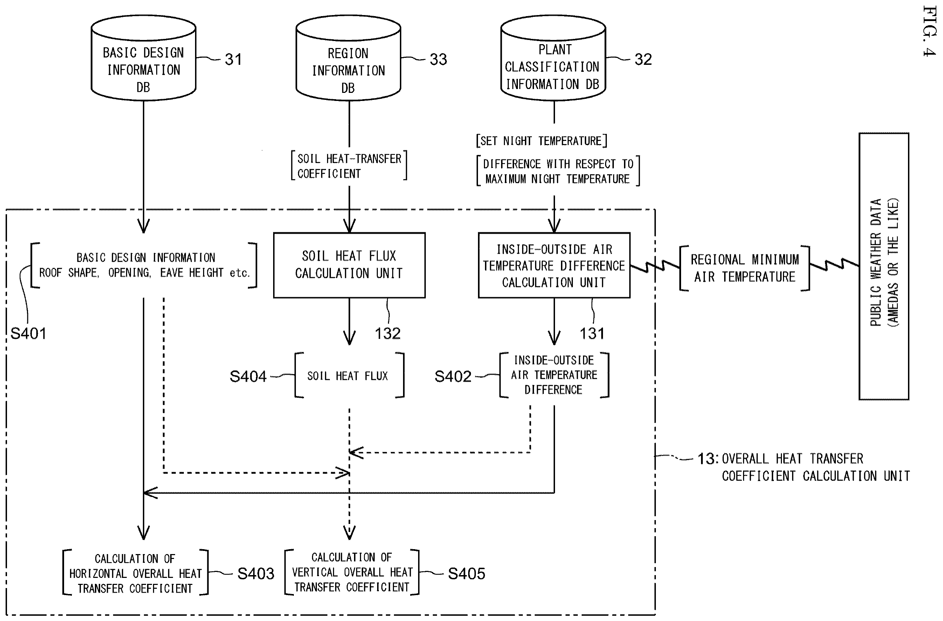

The set night temperature is specified according to the kind of plant. A value corresponding to an average value during the cultivation period is adopted, and is preferably specified also in consideration of an installation region of the greenhouse, seasons, and the like. The set night temperature can also be set manually in the input screen illustrated in FIG. 3, and preferably, the greenhouse design support apparatus 1 has a plant classification information database 32 which stores a proper night temperature (average value) for each kind of plant, and the inside-outside air temperature difference calculation unit 131 is configured to gain access to the plant classification information database 32, read and set a night temperature (average value) corresponding to such a plant when the kind of plant targeted for cultivation is selected in the input screen (refer to FIG. 4).

The regional minimum air temperature is obtained from public weather data obtained from Automated Meteorological Data Acquisition System (AMeDAS) or the like of the corresponding region. The regional minimum air temperature is different depending on a period scheduled for cultivation, and a minimum air temperature during the cultivation period is adopted. Further, the set night temperature of a plant is a temperature corresponding to the average value during the cultivation period as described above, and is preferably controlled so that heating capability becomes maximum toward dawn because a temperature outside the greenhouse drops at and after sunset and becomes the lowest temperature before a time of sunrise. **In** this case, as a result, a night temperature in the greenhouse is controlled to be somewhat higher than the average value toward a time of sunrise. When this is set as a maximum night temperature, the maximum night temperature is preferably determined according to the kind of plant from an empirical value or the like, and for example, in a case of tomato, a temperature several degrees higher than a set night temperature as an average value is adopted. This maximum night temperature or a difference between the maximum night temperature and the set night temperature (average value) is stored together with the set night temperature (average value) in the plant classification information database 32, thereby being read by selecting the kind of plant.

The inside-outside air temperature difference is a difference between this maximum night temperature and the regional minimum air temperature in this embodiment. Accordingly, the inside-outside air temperature difference is calculated by adding the difference between the set night temperature (average value) and the maximum night temperature to the set night temperature (average value) and finding a difference with respect to the regional minimum air temperature. For example, in a case of a set night temperature (average value): 15.5°C, a difference between the set night temperature (average value) and the maximum night temperature: 2°C, a regional minimum air temperature: -11°C, an inside-outside air temperature difference: 28.5°C is obtained.

The soil heat flux calculation unit 132 calculates a soil heat-transfer amount per unit area, which is calculated by multiplying a soil heat-transfer coefficient determined in consideration of the region by the above-described inside-outside air temperature difference. The soil heat-transfer coefficient is a value assigned by distinguishing warm points and cold points regarding points based on the public weather data, and in this embodiment, "-36" is assigned as the warm point in a case where the number of days of a daily minimum air temperature of 0°C or less is less than 112 days/year, and "-31" is assigned as the cold point in a case where the number of days of a daily minimum air temperature of 0°C or less is 112 days or more. The soil heat-transfer coefficient is linked to the region to be stored in a region information database 33. The soil heat flux calculation unit 132 reads the soil heat-transfer coefficient from the region information database 33 to calculate the soil heat-transfer amount (refer to FIG. 4).

The overall heat transfer coefficient calculation unit 13 calculates a horizontal overall heat transfer coefficient using the above-described data. Specifically, as illustrated in FIG. 4, it gains access to the basic design information database 31, and reads the kind of roof material, the kind of lining covering material, the kind of roof shape, the frontage, the eave height, and the aspect ratio, in the above-described basic design information acquired by the basic design information acquisition unit 12 (S401). In the basic design information database 31, average heat-release coefficients are linked to correspond to the kind of roof material and the kind of lining covering material.

Note that the "average heat-release coefficients" are values each obtained by finding an overnight heating load coefficient obtained by dividing an overnight heating heat quantity by an overnight nighttime degree hour corresponding thereto and a coverage area, regarding a plurality of kinds of films (the roof material, the lining covering material (curtain)) within an experimental period, to average them for each kind of films (the roof material, the lining covering material (curtain)). In this embodiment, there was adopted a value found by an experiment from November 9th, 1980 to February 3rd, 1981 conducted by providing four cultivation beds in each of three A to C houses constructed in Oyama Factory Farm Field of SEIWA CO., LTD. (a surface area: 262 m$^2$, a floor area: 120 m$^2$, an outer coating film: an agricultural vinyl chloride film, a heating system: a warm-air heater, a shape of curtain: A house ... a single layer of agricultural vinyl film, B, C houses ... double shaft and double layer, a curtain position (lower layer): A, B houses ... 1.8 m (from the ground), C house ... 1.85 m (from the ground), an interlayer distance in a case of double layer: 20 cm). In the experiment, only a portion on each cultivation bed was covered with a black mulch, and turnip greens, lettuce, field peas, and kidney beans were each planted for each cultivation bed, and an average value of the heating load coefficient in each house was found to correspond to the kind of films, and when the heating load coefficient of the A house was set to 100%, it was found what percent value was obtained according to combination of various films as the heating load coefficient of each of the B, C houses, and this value was set as the "average heat-release coefficient".

As the average heat-release coefficient used for calculation of the horizontal overall heat transfer coefficient and the vertical overall heat transfer coefficient, in this embodiment, when the lining covering material is selected, the average heat-release coefficient of the lining covering material is adopted, and when the lining covering material is not selected, the average heat-release coefficient of the roof material is adopted.

However, using not only the average heat-release coefficient of the member forming the top face, such as the lining covering material or the roof material, but also the average heat-release coefficient in consideration of a heat transfer index of the side face is preferable because improvement in calculation accuracy can be promising. For consideration of heat transfer indexes of the top face and the side face, the average heat-release coefficient is calculated by the following formula. Note that the average heat-release coefficient of the side face is an average heat-release coefficient of a covering material forming the side face.

Average heat-release coefficient = (average heat-release coefficient of top face $\times$ surface area of top face + average heat-release coefficient of side face $\times$ surface area of side face)/(surface area of top face + surface area of side face)

Further, regarding the roof shape, the surface area is different depending on the roof shape, and thus a heat-release coefficient (roof shape coefficient) corresponding thereto is linked. In this embodiment, a roof is divided into a top face portion and a gable portion to set the roof shape coefficients, and the roof shape coefficient 2 of the gable portion is used when the horizontal overall heat transfer coefficient is found, and the roof shape coefficient 1 of the top face portion is used when the later-described vertical overall heat transfer coefficient is found. In the roof shape coefficients, at a ratio to the floor area, a value of less than one or a value of one or more (however, the value of less than one in many cases) (roof shape coefficient 2) is adopted as the former, and a value of one or more (roof shape coefficient 1) is adopted as the latter. The overall heat transfer coefficient calculation unit 13 reads these values of the basic design information and the linked coefficients (S401), and uses the inside-outside air temperature difference found by the inside-outside air temperature difference calculation unit 131 (S402) to calculate the horizontal overall heat transfer coefficient (S403). In this embodiment, the horizontal overall heat transfer coefficient is calculated by the following formula.

Horizontal overall heat transfer coefficient = (average heat-release coefficient $\times$ inside-outside air temperature difference $\times$ roof shape coefficient 2 $\times$ (frontage)$^2$ $\times$ square root of aspect ratio/frontage) + (2 $\times$ average heat-release coefficient $\times$ inside-outside air temperature difference $\times$ eave height/square root of aspect ratio)

The overall heat transfer coefficient calculation unit 13 also calculates the vertical overall heat transfer coefficient using the above-described data. Specifically, by using the information affecting a heat quantity in the vertical direction, in the above-described data, that is, the soil heat flux found by the soil heat flux calculation unit 132 (S404), the average heat-release coefficient of the lining covering material and the roof shape coefficient 1 linked to the roof shape in the basic design information (S401), and the inside-outside air temperature difference found by the inside-outside air temperature difference calculation unit 131 (S402), the vertical overall heat transfer coefficient is calculated (S405). In this embodiment, the vertical overall heat transfer coefficient is calculated by the following formula.

Vertical overall heat transfer coefficient = soil heat flux + average heat-release coefficient $\times$ inside-outside air temperature difference $\times$ roof shape coefficient 1

The floor-area theoretical-value calculation unit 14 calculates a theoretical value of the floor area of the greenhouse capable of securing heating capability maintaining a set night temperature suitable for a plant targeted for cultivation, based on the overall heat transfer coefficients found by the overall heat transfer coefficient calculation unit 13, in this embodiment, the horizontal overall heat transfer coefficient and the vertical overall heat transfer coefficient, to the heat quantity of the recovered heat acquired by the recovered heat quantity acquisition unit 11. When the theoretical value of the floor area is calculated, setting to be calculated as a quadrangular floor shape is preferable in order to simplify the calculation of the area and reduce a calculation load of the greenhouse design support apparatus 1.

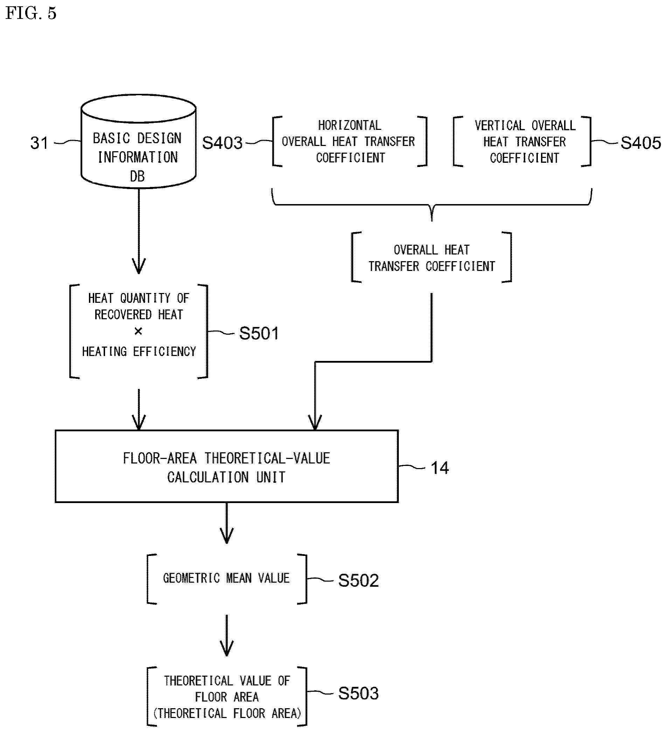

Further, as the heat quantity of the recovered heat, it is computationally possible to also use 100% of the heat quantity acquired by the recovered heat quantity acquisition unit 11, but it is preferable to adopt an actually available heat quantity in consideration of a loss during transportation, or the like. Thus, with the above-described basic design information of the greenhouse, the kind of plant, and the like, as illustrated in FIG. 3, a heating efficiency is preferably allowed to be input as an input item. The floor-area theoretical-value calculation unit 14 uses a heat quantity obtained by multiplying the heat quantity (residual heat quantity) acquired by the recovered heat quantity acquisition unit 11 by the input heating efficiency (for example 90%, 80%, or the like) for the calculation of the theoretical value of the floor area in using the heat quantity of the recovered heat. That is, as illustrated in FIG. 5, the floor-area theoretical-value calculation unit 14 uses this value obtained by multiplying the heat quantity of the recovered heat by the heating efficiency (S501), and, the horizontal overall heat transfer coefficient (S403) and the vertical overall heat transfer coefficient (S405), and first calculates a geometric mean value (S502) of the floor area according to the following formula.

Geometric mean value = (-horizontal overall heat transfer coefficient + (square root of ((horizontal overall heat transfer coefficient)$^2$ - 4 $\times$ vertical overall heat transfer coefficient $\times$ heat quantity of recovered heat $\times$ heating efficiency))/(2 $\times$ vertical overall heat transfer coefficient)

Next, the geometric mean value is squared to calculate the theoretical value of the floor area (S503).

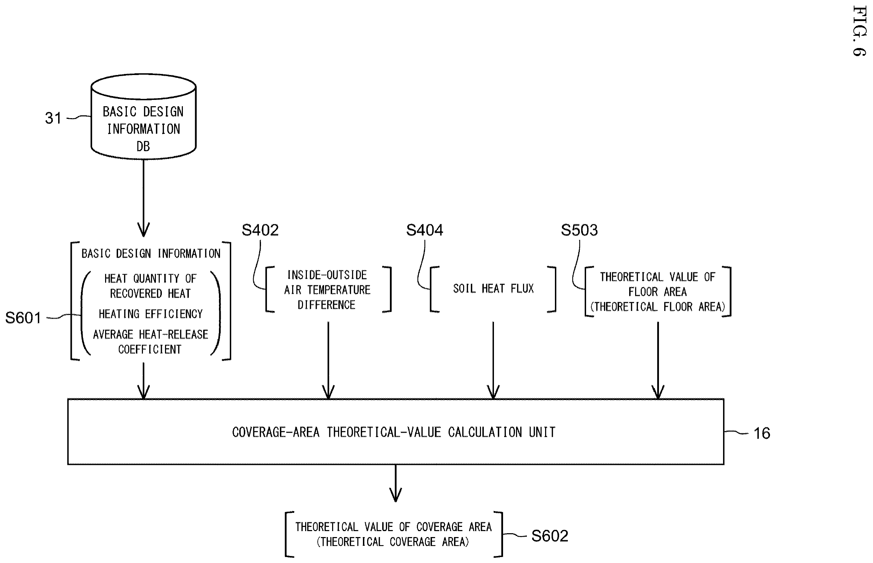

The coverage-area theoretical-value calculation unit 15 calculates a total area, covered with the covering material, adding the side face, the end face, the ceiling face and the gable face forming the roof of the greenhouse together, as a coverage area. Also in this coverage area, similarly to the floor area, an area allowing the heat quantity of the recovered heat to be used at a desired heating efficiency is found. In this embodiment, as illustrated in FIG. 6, by using the heat quantity of the recovered heat, the heating efficiency, and the average heat-release coefficient of the lining covering material in the basic design information (S601), and using the inside-outside air temperature difference found by the inside-outside air temperature difference calculation unit 131 (S402), the soil heat flux found by the soil heat flux calculation unit 132 (S404), and the theoretical values of the floor area calculated by the floor-area theoretical-value calculation unit 14 (S503), a theoretical value of the coverage area is found by the following formula (S602).

Theoretical value of coverage area = (heat quantity of recovered heat $\times$ heating efficiency - soil heat flux $\times$ theoretical value of floor area)/(average heat-release coefficient $\times$ inside-outside air temperature difference)

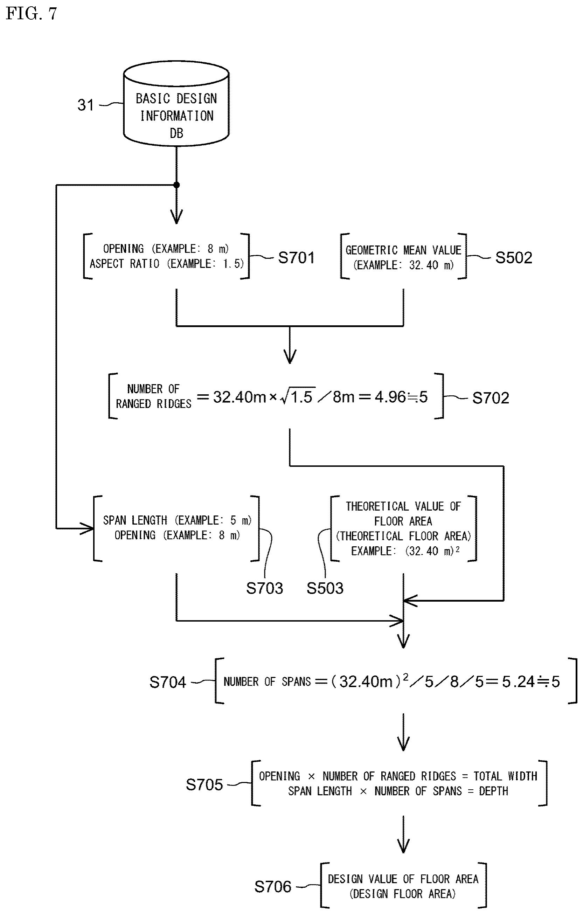

The floor-area design-value calculation unit 16 finds design values of a total width and a depth of the greenhouse so that a design value of the floor area is equal to or less than the theoretical value of the floor area found by the floor-area theoretical-value **calculation** unit 14. First, as illustrated in FIG. 7, referring to the information of the frontage and the aspect ratio stored in the basic design information database 31 (S701), and the geometric mean value for finding the floor area found in the floor-area theoretical-value calculation unit 14 (S502), the number of ranged ridges is found (S702). Since the frontage is a frontage per one ridge as described above, the number of ranged ridges is found from the relation to the aspect ratio.

With respect to the number of ranged ridges, referring to the span length and the frontage stored in the basic design information database 31 (S703) and the floor area found in the floor-area theoretical-value calculation unit 14 (S503), the number of spans is found (S704). For the number of spans, an integral value equal to or less than a value obtained by dividing the theoretical value of the floor area by the number of ranged ridges, the frontage, and the span length is adopted. The total width in design is found from the frontage and the number of ranged ridges, and the depth in design is found from the span length and the number of spans (S705). Then, the design value of the floor area is found by the total width and the depth (S706). Since the number of spans is an integral value equal to or less than the value obtained by dividing the theoretical value of the floor area by the total width (number of ranged ridges $\times$ frontage) and the span length, as described above, the design value of the floor area is equal to or less than the theoretical value of the floor area found in the floor-area theoretical-value calculation unit 14.

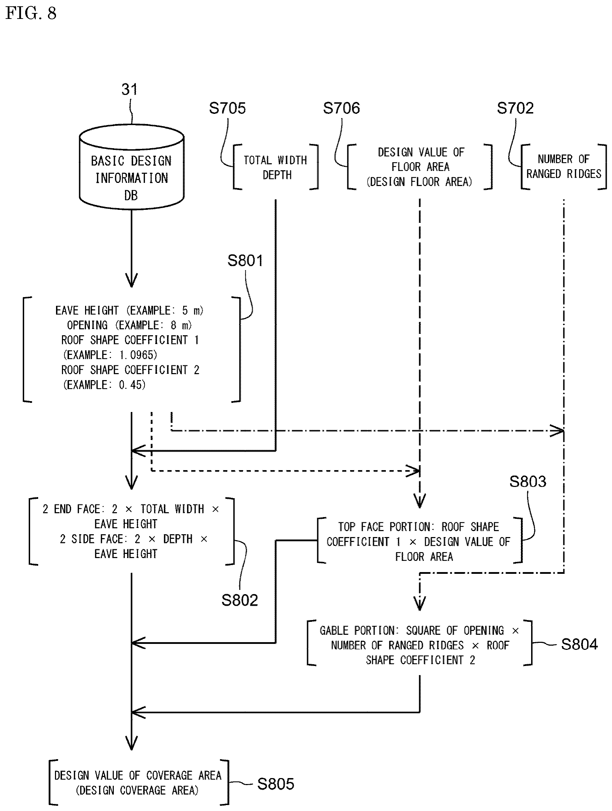

The coverage-area design-value calculation unit 17 finds a design value of the coverage area so as to be equal to or less than the theoretical value of the coverage area found by the coverage-area theoretical-value calculation unit 15. Specifically, it is found using the design value of the floor area found by the floor-area design-value calculation unit 16 (S706), the total width and the depth (S705), the number of ranged ridges (S702), the eave height, the frontage, and the roof shape (roof shape coefficients 1, 2) stored in the basic design information database 31 (S801), as illustrated in FIG. 8. The coverage area of the two end faces (excluding the gable portion included in the roof) and the two side faces are obtained by "2 $\times$ total width $\times$ eave height + 2 $\times$ depth $\times$ eave height" (S802), and the coverage area of the roof is added to this. The coverage area of the roof is found by multiplying the design value of the floor area by the roof shape coefficient 1 of the top face portion regarding the top face portion (S803) and by multiplying a square of the frontage by the number of ranged ridges and the roof shape coefficient 2 of the gable portion regarding the gable portion (S804). Then, the respective coverage areas found in S802, S803, and S804 are added together to be the design value of the coverage area (S805). Since the design value of the floor area found by the floor-area design-value calculation unit 16 and the total width (number of ranged ridges $\times$ frontage) are used, the design value of the coverage area obtained by the coverage-area design-value calculation unit 17 is equal to or less than the theoretical value of the coverage area found by the coverage-area theoretical-value calculation unit 16.

Next, an example of a design simulation of a greenhouse using the greenhouse design support apparatus 1 of this embodiment will be described.

A simulation executor or the like inputs necessary items from the input screen illustrated in FIG. 3. The input items are the heat quantity (residual heat quantity) of the recovered heat (for example, 15000 kcal/h), the heating efficiency (for example, 0.9), the roof shape (triangular roof: a roof shape coefficient 1 = 1.096, a roof shape coefficient 2 = 0.45), the kind of roof material, the kind of lining covering material (Luxous + Tempa: an average heat-release coefficient 1.9), the frontage (for example, 8 m), the eave height (for example, 5 m), the span length in the depth direction (for example, 5 m), the aspect ratio (total width/depth) (for example, 1.5), the kind of plant (for example, tomato), the cultivation start date, the cultivation end date, the name of a place where the greenhouse is scheduled to be installed (for example, Sapporo).

The recovered heat quantity acquisition unit 11 and the basic design information acquisition unit 12 make the basic design information database 31 store these pieces of input information therein. The overall heat transfer coefficient calculation unit 13 acquires the average heat-release coefficient = 1.9 kcal/$m^2$h°C linked according to the kind of lining covering material, and displays it in the input screen in FIG. 3. Further, the set night temperature (average value) = 15.5°C is read from the plant classification information database 32 according to "tomato" input as the kind of plant, and moreover, the difference between the maximum night temperature and the set night temperature (average value) (set night temperature correction (maximum)) = 2°C is read. According to the place name "Sapporo", the regional minimum air temperature is taken in from the public weather data of Sapporo region. The regional minimum air temperature is a regional minimum air temperature during the cultivation period, obtained based on the input cultivation start date and cultivation end date, (for example, -11°C). Further, the soil heat-transfer coefficient linked to the region (for example, -31 kcal/$m^2$h) is read from the region information database 33.

The inside-outside air temperature difference = 28.5°C is output using the above-described set night temperature (average value), set night temperature correction (maximum), and regional minimum air temperature by the inside-outside air temperature difference calculation unit 131. A soil heat flux = 27.71 kcal/$m^2$h is found using the inside-outside air temperature difference (28.5°C) and the soil heat-transfer coefficient (-31 kcal/$m^2$h) by the soil heat flux calculation unit 132.

Next, the overall heat transfer coefficient calculation unit 13 finds the horizontal overall heat transfer coefficient and the vertical overall heat transfer coefficient according to the above-described formulas using these numerical values (refer to FIG. 4), and the floor-area theoretical-value calculation unit 14 calculates a geometric mean value of the floor area = 32.40 m, a theoretical value of the floor area (theoretical floor area) = 1050.02 $m^2$ using the horizontal overall heat transfer coefficient, the vertical overall heat transfer coefficient, the heat quantity (residual heat quantity) of the recovered heat, and the heating efficiency (refer to FIG. 5). The theoretical floor area is displayed on an output screen located in the right half of FIG. 3. When the theoretical floor area is found, the floor-area design-value calculation unit 16 finds the number of ranged ridges according to a formula of geometric mean value of floor area (32.40 m) × square root of aspect ratio (square root of 1.5)/frontage (8 m) as illustrated in FIG. 7. The number of ranged ridges is found as an integral value, thus being found by appropriately rounding off the decimal places with respect to the output value. In this example, the number of ranged ridges = 5 is calculated. Next, the number of spans is found by square of geometric mean value of floor area (32.40 m)$^2$/number of ranged ridges (5)/frontage (8 m)/span length (5 m). The number of spans is also found as an integral value, and here, a value obtained by rounding down the decimal places of a value obtained by the calculation is adopted to be calculated as the number of spans = 5.

The floor-area design-value calculation unit 16 calculates a design value of the floor area (design floor area) = 1000 $m^2$ according to frontage (8 m) × number of ranged ridges (5) × span length (5 m) × number of spans (5), and displays it on the output screen in FIG. 3. Accordingly, on the output screen, with respect to the theoretical floor area: 1050 $m^2$, the design floor area: 1000 $m^2$ equal to or less than the value is displayed.

Meanwhile, the coverage-area theoretical-value calculation unit 15 calculates a theoretical value of the coverage area (theoretical coverage area) = 1995.75 $m^2$ according to the above-described formula using the values of the residual heat quantity = 15000 kcal/h, the heating efficiency = 0.9, the soil heat flux = 27.71 kcal/h$m^2$, the theoretical floor area = 1050.02 $m^2$, the inside-outside air temperature difference = 28.5°C, the average heat-release coefficient of the lining covering material = 1.9 kcal/$m^2$h°C (refer to FIG. 6). Further, the coverage-area design-value calculation unit 17 finds a design value of the coverage area (design coverage area) = 1890.58 $m^2$ according to design floor area (1000 $m^2$) × roof shape coefficient 1 (1.0965) + roof shape coefficient 2 (0.45) × square of frontage (8 m)$^2$) × number of ranged ridges (5) + 2 × total width (40 m) × eave height (5 m) (refer to FIG. 8). The theoretical coverage area and the design coverage area are displayed as 1995.7 $m^2$, 1890.5 $m^2$ on the output screen illustrated in FIG. 3, respectively.

According to this embodiment, the configuration to calculate the theoretical values of the floor area and the coverage area in relation to the overall heat transfer coefficient, on the basis of the heat quantity of the recovered heat, and find the concrete design values is obtained. Consequently, it is possible to design the greenhouse in a size in which the heat quantity of the recovered heat can be used more effectively, and a reduction in greenhouse effect gas can be promising as compared with a case of providing equivalent heating by using heating equipment derived from fossil fuels.

Next, the embodiment of the greenhouse design support apparatus 1 having a function of simulating a heat quantity required in a case of cultivating a plant using the greenhouse designed by the above embodiment, and moreover, simulating a reduction effect of greenhouse effect gas in a case of using the recovered heat will be described.

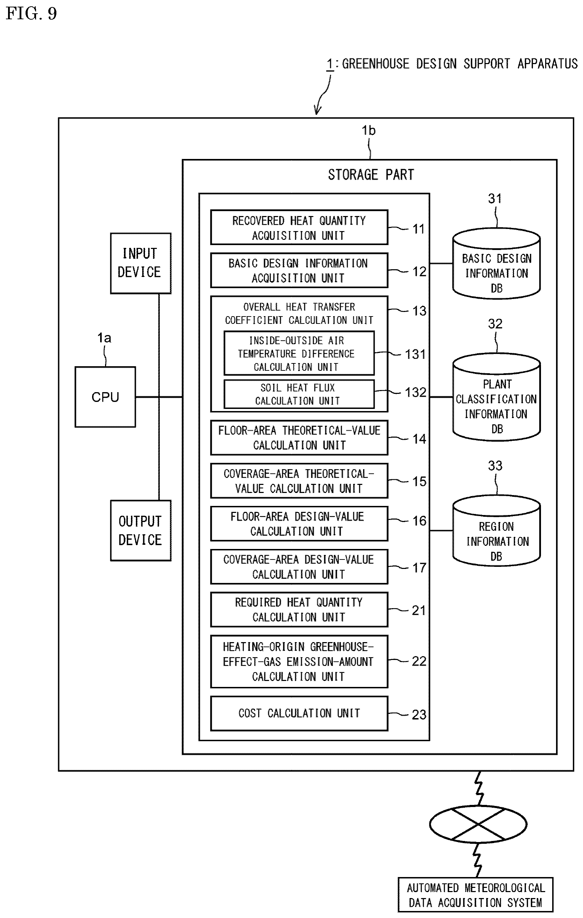

In this embodiment, as illustrated in FIG. 9, a computer program which executes procedures to cause functions as a required heat quantity calculation unit 21, a heating-origin greenhouse-effect-gas emission-amount calculation unit 22, and a cost calculation unit 23 in addition to the above-described recovered heat quantity acquisition unit 11, basic design information acquisition unit 12, overall heat transfer coefficient calculation unit 13, floor-area theoretical-value calculation unit 14, coverage-area theoretical-value calculation unit 15, floor-area design-value calculation unit 16, and coverage-area design-value calculation unit 17 is stored in the storage part 1b.

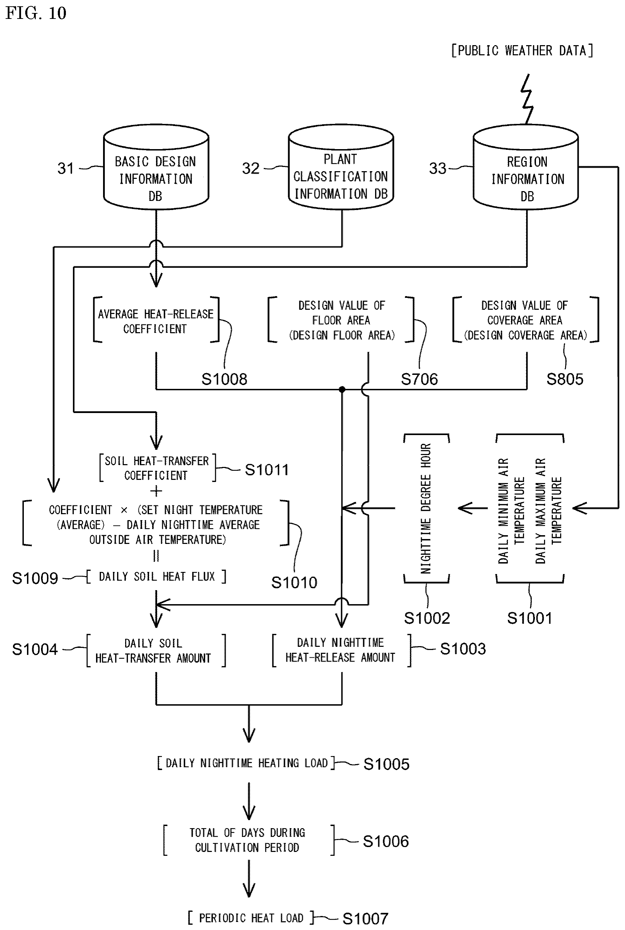

The required heat quantity calculation unit 21 calculates a required heat quantity for securing the set night temperature in the greenhouse. The designed night temperature is as described above, and is set according to the kind of plant. The required heat quantity calculation unit 21 finds a daily nighttime heating load (S1005), in consideration of the design value of the floor area (design floor area) (S706) found by the floor-area design-value calculation unit 16 and the design value of the coverage area (design coverage area) (S805) found by the coverage-area design-value calculation unit 17, to a daily maximum air temperature and a daily minimum air temperature (S1001) obtained from the public weather data of the installation region of the greenhouse, and finds a periodic heat load (S1007) during the cultivation period using this daily nighttime heating load (S1005), as illustrated in FIG. 10. This periodic heat load (S1007) is the required heat quantity for securing the set night temperature during the cultivation period.

In order to find the daily nighttime heating load (S1005), a daily nighttime heat-release amount (S1003) and a daily soil heat-transfer amount (S1004) are found. The daily nighttime heat-release amount (S1003) is found by "design coverage area (S806) × average heat-release coefficient of lining covering material (roof material in a case where the lining covering material is not selected) (S1008) × daily nighttime degree hour (S1002)".

The daily nighttime degree hour (S1002) is a value obtained by integrating a difference between the above-described set night temperature and an outside air temperature. For the nighttime degree hour, an approximate value is used. It is found in accordance with a calculation method of a geometrical heating degree hour when the daily maximum air temperature and the daily minimum air temperature in the region are connected with a straight line (refer to Journal of Agricultural Meteorology (J. Agr. Met.) 38 (1): pages 29-36, 1982, Makio HAYASHI, Toyoki KOZAI "Comparison of Actual and Calculated Heating Degree Hours and a Proposition of Heating Degree Hour Diagram").

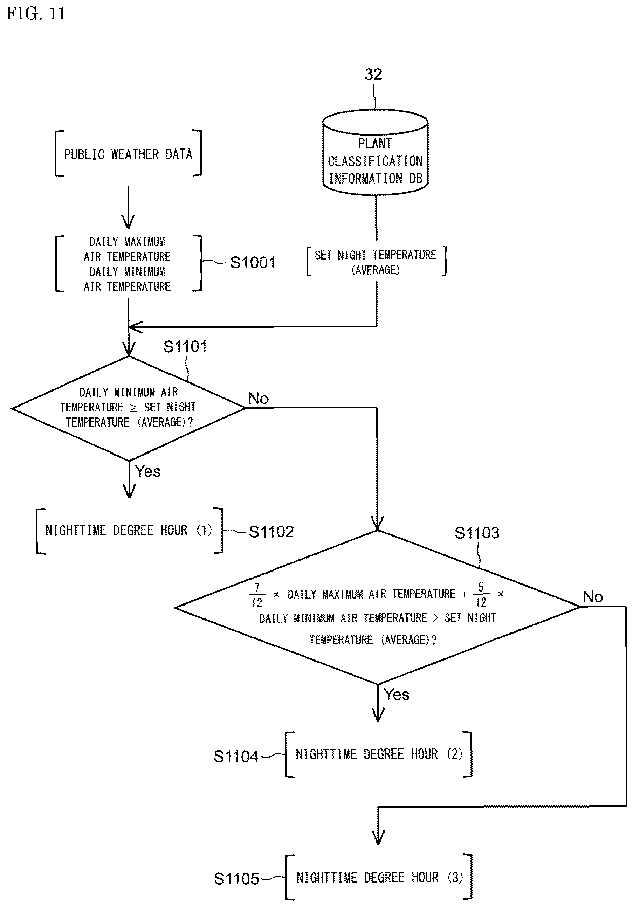

Specifically, as illustrated in FIG. 11, whether to be "daily minimum air temperature ≥ set night temperature" (S1101) or not is determined.

a) A case where the daily minimum air temperature is equal to or more than the set night temperature (a case of Yes in S1101):
The nighttime degree hour is found by "(14 × set night temperature (average value) + (49 × daily maximum air temperature + 119 × daily minimum air temperature)/12) × 0". That is, in this case, there is no need for heating, and thus the nighttime degree hour (1) becomes 0 (S1102).
b) Next, whether to be "7/12 × daily maximum air temperature + 5/12 × daily minimum air temperature > set night temperature (average value)" or not is determined (S1103).

b-1) A case of exceeding the set night temperature (a case of Yes in S1103):
By "12 × (set night temperature (average value) - daily minimum air temperature)2/(daily maximum air temperature - daily minimum air temperature)", the nighttime degree hour (2) is found (S1104).
b-2) A case of being equal to or less than the set night temperature (a case of No in S1103):
By "(14 × set night temperature (average value) + (49 × daily maximum air temperature + 119 × daily minimum air temperature)/12) × 1", the nighttime degree hour (3) is found (S1105).

Note that it is more preferable in terms of accuracy to find the approximate value of the nighttime degree hour by using a machine learning model generated with the daily maximum air temperature and the daily minimum air temperature set as explanatory variables and with the nighttime degree hour set as an objective variable.

A daily soil heat-transfer amount (S1004 in FIG. 10) is found by multiplying a daily soil heat flux (S1009) by the design floor area (1000 m$^2$ in the above-described example) (S706) and multiplying this by 14 hours corresponding to a night time from sunset to the following morning. The daily soil heat flux (S1009) is found by multiplying a difference between the set night temperature (average value) and a daily nighttime average outside air temperature by a coefficient (S1010) and adding the soil heat-transfer coefficient (in a case of Sapporo, -31) (S1011) to this. The daily nighttime average outside air temperature is found, using the daily maximum air temperature and the daily minimum air temperature (S1001) in the region, by "(5 × daily maximum air temperature + 19 × daily minimum air temperature)/24".

By adding the daily nighttime heat-release amount (S1003) and the daily soil heat-transfer amount (S1004) obtained in this manner together, the daily nighttime heating load (S1005) is found. When a total of the daily nighttime heat-release amount (S1003) and the daily soil heat-transfer amount (S1004) is 0 or less, the daily nighttime heating load is calculated as 0.

The daily nighttime heating loads (S1005) are found for the number of days corresponding to the cultivation period, and they are added together (S1006). The periodic heat load (S1007) is thus obtained. Note that if the period is set for each month, a monthly periodic heat load is found, and if ones for 12 months are added together, an annual periodic heat load can be obtained.

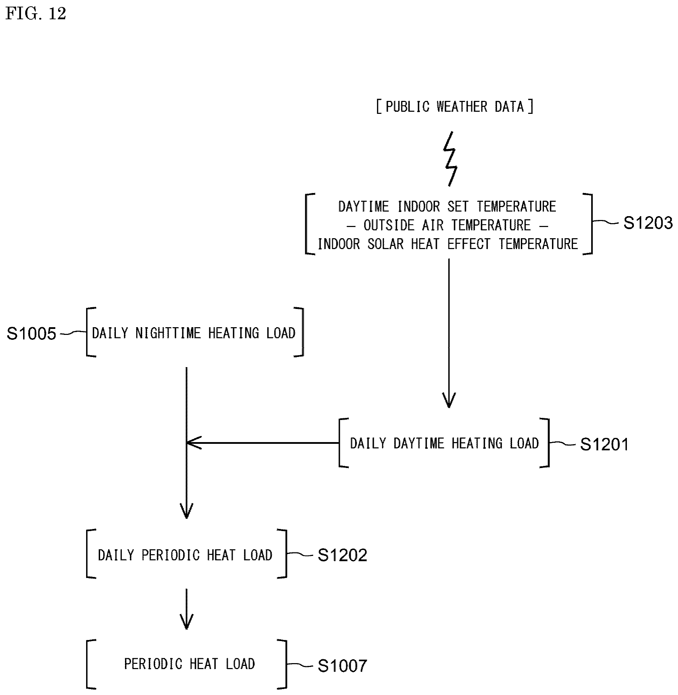

However, in finding the periodic heat load (S1007), as illustrated in FIG. 12, not only the daily nighttime heating load (S1005) but also a daily daytime heating load (S1201) is added to find a daily periodic heat load (S1202), and it is preferable to be configured to find the daily periodic heat loads for days corresponding to the cultivation period to add them together. The daily daytime heating load (S1201) is a value in consideration of an effect of an amount of solar radiation. As the daily daytime heating load, a fixed value can also be adopted simply, but it is preferable to refer to the public weather data, find "daytime indoor set temperature - outside air temperature - indoor solar heat effect temperature" (S1203), and find a value (degree hour) obtained by integrating only a positive part in it. Thus, by using the daily daytime heating load (S1201), calculation accuracy of the periodic heat load (S1007) increases. It is more preferable for the purpose of increasing the accuracy to find the daily daytime heating load (degree hour) (S1201) by using a machine learning model generated with the daily maximum air temperature, the daily minimum air temperature, and sunshine hours set as explanatory variables.

The heating-origin greenhouse-effect-gas emission-amount calculation unit 22 converts the required heat quantity for securing the set night temperature during the cultivation period, which is the periodic heat load (S1007) found by the required heat quantity calculation unit 21, to a greenhouse effect gas emission amount.

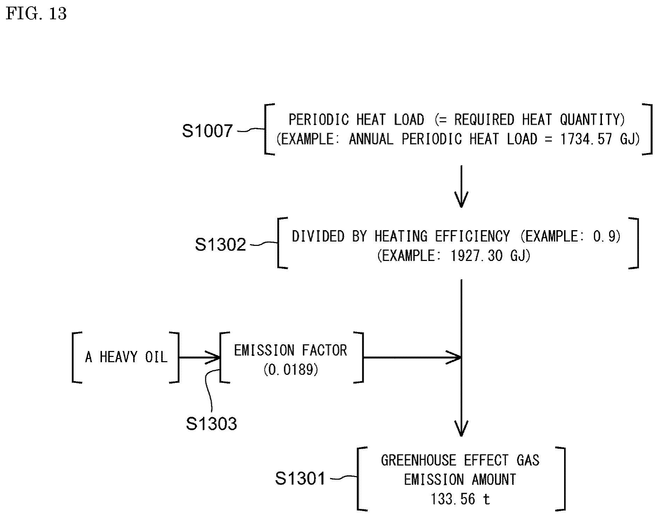

At this time, first, the heating-origin greenhouse-effect-gas emission-amount calculation unit 22 finds a greenhouse effect gas emission amount (S1301) in a case of securing the above-described required heat quantity by operation of heating equipment, as illustrated in FIG. 13. The periodic heat load (S1007) which is the required heat quantity may be made to correspond to the cultivation period, or may be found every month or every year as described above. However, as the converted greenhouse effect gas emission amount (S1301), a heat quantity multiplied by the heating efficiency (for example, 0.9) is used as described above in a case of using the recovered heat when a comparison is made with a case of providing the required heat quantity with the recovered heat. Thus, when the greenhouse effect gas emission amount in a case of securing the required heat quantity by the operation of the heating equipment is found, a value obtained by dividing the periodic heat load (S1007) obtained in the above manner by the heating efficiency (for example, 0.9) is adopted (S1302). For example, when an annual periodic heat load = 1734.57 GJ which is the required heat quantity is found by the required heat quantity calculation unit 21 (S1007), this is divided by, for example, the heating efficiency = 0.9 to obtain 1927.30 GJ (S1302). This value is multiplied by an emission factor (S1303) linked according to the kind of fossil fuel. The kind of fossil fuel can be selected on the input screen, and as illustrated in FIG. 3, when an A heavy oil is selected, for example, a carbon dioxide emission factor = 0.0189 is adopted. Consequently, in this example, 1927.30 GJ × 0.0189 × 44/12 = 133.56 t is found, and the greenhouse effect gas emission amount = 133.5 t when the heating equipment is operated (when there is no resource recycling) is displayed on the output screen in FIG. 3.

On the other hand, in this embodiment, since the simulation of designing the greenhouse capable of providing the above-described required heat quantity by using the recovered heat at a predetermined heating efficiency (for example, 0.9) is performed, a fuel consumption amount in a case of securing the required heat quantity by using the recovered heat is 0 in principle, and the greenhouse effect gas emission amount becomes 0.

Accordingly, a greenhouse effect gas reduction amount found by the heating-origin greenhouse-effect-gas emission-amount calculation unit 22 is 133.5 t in this example.

Note that when a case of failing to provide the required heat quantity with the recovered heat is considered, it is also possible to add a calculation program which calculates a greenhouse effect gas emission amount accompanied by compensating for a shortage of the heat quantity with the heating equipment.

The cost calculation unit 23 finds a cost required until securing the required heat quantity by the operation of the heating equipment and a cost required until securing the required heat quantity by using the recovered heat individually, and finds a reduction energy cost from a difference between the costs. First, in the cost required until securing the required heat quantity by the operation of the heating equipment, in a case of the A heavy oil, for example, when a unit price on a heat-quantity basis is set to 2000 yen, the cost when the above-described 1734.57 GJ is provided, for example, is, in consideration of the heating efficiency (for example, 0.9) for comparison with a case of using the recovered heat, ¥2000 × 1734.57 GJ/0.9 to be approximately 3,854,600 yen.

On the other hand, when a factory transaction unit price of the recovered heat which a greenhouse construction and management side purchases from an exhaust heat providing side is set to ¥1100/GJ in a unit price of the heat quantity, ¥1100 × 1734.57 GJ/0.9 is obtained to be thus approximately 2,120,030 yen. This amount of money is new proceeds based on exhaust heat which is only emitted into the air conventionally when seen from the factory or the like which is the exhaust heat providing side. Accordingly, in the output screen in FIG. 3, an item displaying this amount of money as gross proceeds in the exhaust heat providing side is also preferably provided. Allowing such a numerical value to be grasped before the construction of the greenhouse results in an incentive for the exhaust heat providing side to be in cooperation with the greenhouse.

The cost calculation unit 23 displays approximately 3,854,600 yen and approximately 2,120,030 yen on the output screen illustrated in FIG. 3 (note that in FIG. 3, accurate calculated values: "¥3,854,174", "¥2,119,796" are displayed). Then, a difference between the values is calculated. This difference of approximately 1,734,570 yen (in FIG. 3, displayed as an accurate calculated value: "1,734,379" (there is an error associated with fraction processing)) is a difference between the case of providing the required heat quantity with heating and the case of providing the required heat quantity with the recovered heat.

In this embodiment, in the greenhouse in which the design values of the floor area and the coverage area are found, the required heat quantity when a desired plant is cultivated during a predetermined cultivation period can be found. Further, the greenhouse effect gas reduction amount can be found from the difference between the case of using fossil fuels and the case of using the recovered heat by the heating-origin greenhouse-effect-gas emission-amount calculation unit 22, and moreover, the difference between the cases can be grasped from the cost side by the cost calculation unit 23. Consequently, in this embodiment, the greenhouse in a size in which the recovered heat can be effectively used at a maximum can be designed, and the greenhouse effect gas reduction amount and the reduction cost when the greenhouse is used to use the recovered heat can be visualized, which allows an advantage when the greenhouse using the recovered heat is constructed and managed to be made clearer. Further, also in the factory or the like providing the recovered heat, effective use of the exhaust heat and a profit in this case are made clearer. As a result, for both positions of the greenhouse construction and management side and the exhaust heat providing side, an incentive to promote the construction of the greenhouse capable of contributing to a reduction in greenhouse effect gas is offered.

Explanation of Reference Signs

| | |
|---|---|
| 1 | greenhouse design support apparatus |
| 11 | recovered heat quantity acquisition unit |
| 12 | basic design information acquisition unit |
| 13 | overall heat transfer coefficient calculation unit |
| 131 | inside-outside air temperature difference calculation unit |
| 132 | soil heat flux calculation unit |
| 14 | floor-area theoretical-value calculation unit |
| 15 | coverage-area theoretical-value calculation unit |
| 16 | floor-area design-value calculation unit |
| 17 | coverage-area design-value calculation unit |
| 21 | required heat quantity calculation unit |
| 22 | heating-origin greenhouse-effect-gas emission-amount calculation unit |
| 23 | cost calculation unit 23 |
| 31 | basic design information database |
| 32 | plant classification information database |
| 33 | region information database |

**Claims**

1. A greenhouse design support apparatus which supports design of a greenhouse scheduled to be installed in a predetermined region, the greenhouse design support apparatus comprising:

   a recovered heat quantity acquisition unit which acquires a heat quantity of recovered heat capable of being recovered and used, in thermal energy emitted from various devices and facilities;
   a basic design information acquisition unit which acquires basic design information of the greenhouse;
   an overall heat transfer coefficient calculation unit which finds an overall heat transfer coefficient of the greenhouse in a case of cultivating a predetermined plant during a predetermined cultivation period, in the greenhouse provided with the basic design information; and
   a floor-area theoretical-value calculation unit which calculates a theoretical value of a floor area of the greenhouse capable of securing heating capability maintaining a set night temperature suitable for the plant, in consideration of the overall heat transfer coefficient, to the heat quantity of the recovered heat.

2. The greenhouse design support apparatus according to claim 1, wherein as the overall heat transfer coefficient, at least one of a horizontal overall heat transfer coefficient and a vertical overall heat transfer coefficient of the greenhouse is used.

3. The greenhouse design support apparatus according to claim 2, wherein:

   the overall heat transfer coefficient calculation unit comprises an inside-outside air temperature difference

**EP 4 674 254 A1**

calculation unit which finds an inside-outside air temperature difference between the set night temperature and a regional minimum air temperature in the region which is estimated during the cultivation period, in the case of cultivating the plant during the cultivation period; and

the horizontal overall heat transfer coefficient and the vertical overall heat transfer coefficient are found in consideration of the inside-outside air temperature difference.

4. The greenhouse design support apparatus according to claim 3, wherein:

the overall heat transfer coefficient calculation unit comprises a soil heat flux calculation unit which calculates a soil heat flux in the region during the cultivation period; and
the vertical overall heat transfer coefficient is calculated based on the soil heat flux.

5. The greenhouse design support apparatus according to claim 1, wherein the floor-area theoretical-value calculation unit calculates the theoretical value of the floor area by being assumed to be a quadrangular floor shape.

6. The greenhouse design support apparatus according to claim 4, comprising a coverage-area theoretical-value calculation unit which calculates a theoretical value of a coverage area of the greenhouse capable of using the recovered heat found by the recovered heat quantity acquisition unit at a desired efficiency, based on the theoretical value of the floor area, the inside-outside air temperature difference, the soil heat flux, and the basic design information.

7. The greenhouse design support apparatus according to claim 1, comprising a floor-area design-value calculation unit which finds design values of a total width and a depth of the greenhouse so that a design value of the floor area of the greenhouse is equal to or less than the theoretical value of the floor area.

8. The greenhouse design support apparatus according to claim 6, comprising:

a floor-area design-value calculation unit which finds design values of a width and a depth of the greenhouse so that a design value of the floor area of the greenhouse is equal to or less than the theoretical value of the floor area; and
a coverage-area design-value calculation unit which finds a design value of the coverage area of the greenhouse at equal to or less than the theoretical value of the coverage area, based on the design value of the floor area found by the floor-area design-value calculation unit, the total width and the depth, and the basic design information acquired in the basic design information acquisition unit.

9. The greenhouse design support apparatus according to claim 8, comprising a required heat quantity calculation unit which calculates a required heat quantity for securing a set night temperature in the greenhouse, wherein
the required heat quantity calculation unit is a means of calculating, as the required heat quantity, a periodic heat load during the predetermined cultivation period which is calculated using a daily nighttime heating load found in consideration of the design value of the floor area and the design value of the coverage area, to a daily maximum air temperature and a daily minimum air temperature obtained from public weather data of an installation region of the greenhouse.

10. The greenhouse design support apparatus according to claim 9, wherein the periodic heat load is found by adding a daily daytime heating load to the daily nighttime heating load.

11. The greenhouse design support apparatus according to claim 9 or 10, comprising a heating-origin greenhouse-effect-gas emission-amount calculation unit which finds a greenhouse effect gas emission amount in a case of securing the required heat quantity by operation of heating equipment, makes a comparison with a greenhouse effect gas emission amount in a case of securing the required heat quantity by using the recovered heat, and finds a difference between the greenhouse effect gas emission amounts as a greenhouse effect gas reduction amount in a case of using the recovered heat.

12. The greenhouse design support apparatus according to claim 11, wherein in a case of securing all the required heat quantity by using the recovered heat, a fuel consumption amount = 0 and a greenhouse effect gas emission amount = 0 are obtained.

13. The greenhouse design support apparatus according to claim 11, comprising a cost calculation unit which finds a cost required until securing the required heat quantity by the operation of the heating equipment and a cost required until securing the required heat quantity by using the recovered heat individually, and finds a reduction energy cost from a difference between the costs.

14. A computer program which causes a computer to function as a greenhouse design support apparatus which supports design of a greenhouse installed in a predetermined region, the computer program causing the computer to execute:

   a procedure of acquiring a heat quantity of recovered heat capable of being recovered and used, in thermal energy emitted from various devices and facilities;
   a procedure of acquiring basic design information of the greenhouse;
   a procedure of finding an overall heat transfer coefficient of the greenhouse in a case of cultivating a predetermined plant during a predetermined cultivation period, in the greenhouse provided with the basic design information; and
   a procedure of calculating a theoretical value of a floor area of the greenhouse capable of securing heating capability maintaining a set night temperature suitable for the plant, in consideration of the overall heat transfer coefficient, to the heat quantity of the recovered heat.

15. The computer program according to claim 14, wherein as the overall heat transfer coefficient, at least one of a horizontal overall heat transfer coefficient and a vertical overall heat transfer coefficient of the greenhouse is used.

16. The computer program according to claim 15, wherein:

   in the procedure of calculating the overall heat transfer coefficient, an inside-outside air temperature difference between the set night temperature and a regional minimum air temperature in the region which is estimated during the cultivation period is found in the case of cultivating the plant during the cultivation period; and
   the horizontal overall heat transfer coefficient and the vertical overall heat transfer coefficient are found in consideration of the inside-outside air temperature difference.

17. The computer program according to claim 16, wherein:

   in the procedure of calculating the overall heat transfer coefficient, a soil heat flux in the region during the cultivation period is calculated; and
   the vertical overall heat transfer coefficient is calculated based on the soil heat flux.

18. The computer program according to claim 17, wherein a theoretical value of a coverage area of the greenhouse capable of using the recovered heat at a desired efficiency is calculated based on the theoretical value of the floor area, the inside-outside air temperature difference, the soil heat flux, and the basic design information.

19. The computer program according to claim 14, wherein design values of a total width and a depth of the greenhouse are found so that a design value of the floor area of the greenhouse is equal to or less than the theoretical value of the floor area.

20. The computer program according to claim 18, wherein:

   design values of a width and a depth of the greenhouse are found so that a design value of the floor area of the greenhouse is equal to or less than the theoretical value of the floor area; and
   a design value of the coverage area of the greenhouse is found at equal to or less than the theoretical value of the coverage area, based on the design value of the floor area, the total width and the depth, and the basic design information.

21. The computer program according to claim 20, wherein
   further, a periodic heat load during the predetermined cultivation period which is calculated using a daily nighttime heating load found in consideration of the design value of the floor area and the design value of the coverage area, to a daily maximum air temperature and a daily minimum air temperature obtained from public weather data of an installation region of the greenhouse is calculated as a required heat quantity for securing a set night temperature in the greenhouse.

22. The computer program according to claim 21, wherein the periodic heat load is found by adding a daily daytime heating load to the daily nighttime heating load.

23. The computer program according to claim 21 or 22, wherein further, a heating-origin greenhouse effect gas emission amount in which a greenhouse effect gas emission amount in a case of securing the required heat quantity by operation of heating equipment is found, a comparison is made with a greenhouse effect gas emission amount in a case of securing the required heat quantity by using the recovered heat, and a difference between the greenhouse effect gas emission amounts is found as a greenhouse effect gas reduction amount in a case of using the recovered heat is calculated.

24. The computer program according to claim 23, wherein further, a cost required until securing the required heat quantity by the operation of the heating equipment and a cost required until securing the required heat quantity by using the recovered heat are found individually, and a reduction energy cost from a difference between the costs is found.

25. A computer-readable recording medium in which the computer program according to any one of claims 14 to 24 is recorded.

FIG. 1

1 : GREENHOUSE DESIGN SUPPORT APPARATUS

FIG. 2

```
          ┌─────────────────────┐
          │       BOILER        │
          │       HEATER        │
          │   POWER STATION     │
          │      FACTORY        │
          │         .           │
          │         .           │
          │         .           │
          └─────────┬───────────┘
                    │ EMISSION
                    ∨
          ┌                     ┐
                THERMAL ENERGY
          └                     ┘
                    │ RECOVERY
                    ∨
          ┌                     ┐
                RECOVERED HEAT
          └                     ┘
                    │
                    ∨
          ┌─────────────────────┐
          │ ┌─────────────────┐ │
          │ │ RECOVERED HEAT  │ │
      11 ─┼─┤    QUANTITY     │ │      ◁── 1: GREENHOUSE DESIGN SUPPORT APPARATUS
          │ │ ACQUISITION UNIT│ │
          │ └─────────────────┘ │
          │         .           │
          │         .           │
          │         .           │
          └─────────────────────┘
```

FIG. 3

EP 4 674 254 A1

▼ INPUT

RESIDUAL HEAT QUANTITY  [ 15,000 ] kcal/h

PLACE NAME [ SAPPORO ]  **POINT SEARCH**

[ ] GJ/h

☑ USE MINIMUM AIR TEMPERATURE WITHIN CULTIVATION PERIOD

CULTIVATION INFORMATION

HOUSE INFORMATION

CO2 SUPPLY AMOUNT [ 15 ] kg/h

KIND OF CROP [ TOMATO ▼ ]

SET NIGHT TEMPERATURE [ 15.5 ] °C

CULTIVATION START DATE [▦ 2023.00.00 ]

CULTIVATION END DATE [▦ 2023.00.00 ]

KIND OF SCREEN [ LUXOUS + TEMPA ▼ ]

AVERAGE HEAT-RELEASE COEFFICIENT [ 1.9 ] kcal/m²h°C

KIND OF ROOF MATERIAL [ ▼ ]

ROOF SHAPE [ TRIANGULAR ROOF ▼ ]

LIGHT TRANSMITTANCE [ ] %

OPENING [ 8 ] m

EAVE HEIGHT [ 5 ] m

SPAN LENGTH [ 5 ] m

ASPECT RATIO [ 1.5 ]

RECYCLING RATE [ ] %

HEATING EFFICIENCY [ 0.9 ]

HEAT QUANTITY  KIND OF FUEL : [ A HEAVY OIL ▼ ]

UNIT PRICE : [ 79 YEN ] /L

MARKET UNIT PRICE

**KIND · UNIT PRICE INPUT**

HEAT QUANTITY [ 2,000 YEN ] /GJ

CO2 [ ] /kg

FACTORY TRANSACTION UNIT PRICE

HEAT QUANTITY [ 1,100 YEN ] /GJ

CO2 [ ] /kg

▼ ANNUAL ENERGY USE RESULT BY RESOURCE RECYCLING

THEORETICAL AREA : 1,015 m²

DESIGN AREA : 1,000 m²

THEORETICAL COVERAGE AREA : 1,995.75 m²

DESIGN COVERAGE AREA : 1,890.5 m²

ANNUAL HEATING LOAD : 1,735 GJ

NUMBER OF RANGED RIDGES : 5

NUMBER OF SPANS : 5

| GREENHOUSE EFFECT GAS EMISSION AMOUNT | ABSENCE OF RESOURCE RECYCLING | PRESENCE OF RESOURCE RECYCLING | EMISSION REDUCTION AMOUNT |
|---|---|---|---|
| HEATING LOAD | 133.5t | 0t | 133.5t |

| | ABSENCE OF RESOURCE RECYCLING | PRESENCE OF RESOURCE RECYCLING | REDUCTION ENERGY COST |
|---|---|---|---|
| HEATING COST | ¥ 3,854,174 | ¥2,119,796 | ¥ 1,734,379 |

INPUT SCREEN

OUTPUT SCREEN

FIG. 4

Fig. 4 — Overall heat transfer coefficient calculation unit block diagram, showing:

- BASIC DESIGN INFORMATION DB — 31
- REGION INFORMATION DB — 33
- PLANT CLASSIFICATION INFORMATION DB — 32

[SOIL HEAT-TRANSFER COEFFICIENT]

[SET NIGHT TEMPERATURE]
[DIFFERENCE WITH RESPECT TO MAXIMUM NIGHT TEMPERATURE]

[BASIC DESIGN INFORMATION ROOF SHAPE, OPENING, EAVE HEIGHT etc.]  S401

SOIL HEAT FLUX CALCULATION UNIT  132

INSIDE-OUTSIDE AIR TEMPERATURE DIFFERENCE CALCULATION UNIT  131

[REGIONAL MINIMUM AIR TEMPERATURE]

PUBLIC WEATHER DATA (AMEDAS OR THE LIKE)

S404 — [SOIL HEAT FLUX]

S402 — [INSIDE-OUTSIDE AIR TEMPERATURE DIFFERENCE]

13: OVERALL HEAT TRANSFER COEFFICIENT CALCULATION UNIT

[CALCULATION OF HORIZONTAL OVERALL HEAT TRANSFER COEFFICIENT] — S403

[CALCULATION OF VERTICAL OVERALL HEAT TRANSFER COEFFICIENT] — S405

FIG. 5

31 — BASIC DESIGN INFORMATION DB

S403 — HORIZONTAL OVERALL HEAT TRANSFER COEFFICIENT

VERTICAL OVERALL HEAT TRANSFER COEFFICIENT — S405

OVERALL HEAT TRANSFER COEFFICIENT

HEAT QUANTITY OF RECOVERED HEAT × HEATING EFFICIENCY — S501

FLOOR-AREA THEORETICAL-VALUE CALCULATION UNIT — 14

GEOMETRIC MEAN VALUE — S502

THEORETICAL VALUE OF FLOOR AREA (THEORETICAL FLOOR AREA) — S503

FIG. 6

FIG. 7

BASIC DESIGN
INFORMATION
DB

31

$$\begin{bmatrix} \text{OPENING (EXAMPLE: 8 m)} \\ \text{ASPECT RATIO (EXAMPLE: 1.5)} \end{bmatrix}\!\! \sim \text{S701}$$

$$\begin{bmatrix} \text{GEOMETRIC MEAN VALUE} \\ \text{(EXAMPLE: 32.40 m)} \end{bmatrix}\!\! \sim \text{S502}$$

$$\begin{bmatrix} \text{NUMBER OF} \\ \text{RANGED RIDGES} \end{bmatrix} = 32.40\text{m} \times \sqrt{1.5} / 8\text{m} = 4.96 \fallingdotseq 5 \Big]\!\! \sim \text{S702}$$

$$\begin{bmatrix} \text{SPAN LENGTH (EXAMPLE: 5 m)} \\ \text{OPENING (EXAMPLE: 8 m)} \end{bmatrix}$$

S703   S503

$$\begin{bmatrix} \text{THEORETICAL VALUE OF} \\ \text{FLOOR AREA} \\ \text{(THEORETICAL FLOOR AREA)} \\ \text{EXAMPLE: } (32.40 \text{ m})^2 \end{bmatrix}$$

$$\text{S704} \sim \Big[ \text{NUMBER OF SPANS} = (32.40\text{m})^2 / 5 / 8 / 5 = 5.24 \fallingdotseq 5 \Big]$$

$$\text{S705} \sim \begin{bmatrix} \text{OPENING} \times \text{NUMBER OF RANGED RIDGES} = \text{TOTAL WIDTH} \\ \text{SPAN LENGTH} \times \text{NUMBER OF SPANS} = \text{DEPTH} \end{bmatrix}$$

$$\text{S706} \sim \begin{bmatrix} \text{DESIGN VALUE OF FLOOR AREA} \\ \text{(DESIGN FLOOR AREA)} \end{bmatrix}$$

FIG. 8

```
        31              S705          S706                    S702
                   ┌──────────┐  ┌──────────────┐       ┌──────────────┐
   ┌─────────┐     │  TOTAL WIDTH │ │ DESIGN VALUE OF │     │  NUMBER OF   │
   │ BASIC DESIGN │ │    DEPTH     │ │  FLOOR AREA    │     │ RANGED RIDGES│
   │ INFORMATION  │ └──────────┘  │(DESIGN FLOOR AREA)│    └──────────────┘
   │     DB      │                └──────────────┘
   └─────────┘
                          S801
   ┌─────────────────────────────┐
   │ EAVE HEIGHT (EXAMPLE: 5 m)  │
   │   OPENING (EXAMPLE: 8 m)    │
   │ ROOF SHAPE COEFFICIENT 1    │
   │   (EXAMPLE: 1.0965)         │
   │ ROOF SHAPE COEFFICIENT 2    │
   │   (EXAMPLE: 0.45)           │
   └─────────────────────────────┘

   ┌─────────────────────────────┐              ┌──────────────────────────┐
   │ 2 END FACE: 2 × TOTAL WIDTH ×│             │ TOP FACE PORTION: ROOF SHAPE │   S803
   │          EAVE HEIGHT        │              │ COEFFICIENT 1 × DESIGN VALUE OF │
   │ 2 SIDE FACE: 2 × DEPTH ×    │              │        FLOOR AREA           │
   │          EAVE HEIGHT        │              └──────────────────────────┘
   └─────────────────────────────┘
                   S802
                                     ┌──────────────────────────────────┐
                                     │ GABLE PORTION: SQUARE OF OPENING × │   S804
                                     │  NUMBER OF RANGED RIDGES × ROOF    │
                                     │      SHAPE COEFFICIENT 2           │
                                     └──────────────────────────────────┘

   ┌──────────────────────────────┐
   │ DESIGN VALUE OF COVERAGE AREA │   S805
   │   (DESIGN COVERAGE AREA)      │
   └──────────────────────────────┘
```

FIG. 9

1 : GREENHOUSE DESIGN SUPPORT APPARATUS

1b

STORAGE PART

INPUT DEVICE

RECOVERED HEAT QUANTITY ACQUISITION UNIT ~ 11

BASIC DESIGN INFORMATION ACQUISITION UNIT ~ 12

31

BASIC DESIGN INFORMATION DB

1a

OVERALL HEAT TRANSFER COEFFICIENT CALCULATION UNIT ~ 13

INSIDE-OUTSIDE AIR TEMPERATURE DIFFERENCE CALCULATION UNIT ~ 131

CPU

SOIL HEAT FLUX CALCULATION UNIT ~ 132

32

PLANT CLASSIFICATION INFORMATION DB

FLOOR-AREA THEORETICAL-VALUE CALCULATION UNIT ~ 14

COVERAGE-AREA THEORETICAL-VALUE CALCULATION UNIT ~ 15

33

OUTPUT DEVICE

FLOOR-AREA DESIGN-VALUE CALCULATION UNIT ~ 16

REGION INFORMATION DB

COVERAGE-AREA DESIGN-VALUE CALCULATION UNIT ~ 17

REQUIRED HEAT QUANTITY CALCULATION UNIT ~ 21

HEATING-ORIGIN GREENHOUSE-EFFECT-GAS EMISSION-AMOUNT CALCULATION UNIT ~ 22

COST CALCULATION UNIT ~ 23

AUTOMATED METEOROLOGICAL DATA ACQUISITION SYSTEM

FIG. 10

[PUBLIC WEATHER DATA]

31 — BASIC DESIGN INFORMATION DB

32 — PLANT CLASSIFICATION INFORMATION DB

33 — REGION INFORMATION DB

[AVERAGE HEAT-RELEASE COEFFICIENT]

S1008

[DESIGN VALUE OF FLOOR AREA (DESIGN FLOOR AREA)]

S706

[DESIGN VALUE OF COVERAGE AREA (DESIGN COVERAGE AREA)]

S805

[SOIL HEAT-TRANSFER COEFFICIENT] — S1011
+
[COEFFICIENT × (SET NIGHT TEMPERATURE (AVERAGE) − DAILY NIGHTTIME AVERAGE OUTSIDE AIR TEMPERATURE)]

S1009 — [DAILY SOIL HEAT FLUX]    S1010

[NIGHTTIME DEGREE HOUR]

S1002

[DAILY MINIMUM AIR TEMPERATURE DAILY MAXIMUM AIR TEMPERATURE]

S1001

S1004 — [DAILY SOIL HEAT-TRANSFER AMOUNT]

[DAILY NIGHTTIME HEAT-RELEASE AMOUNT] — S1003

[DAILY NIGHTTIME HEATING LOAD] — S1005

[TOTAL OF DAYS DURING CULTIVATION PERIOD] — S1006

[PERIODIC HEAT LOAD] — S1007

FIG. 11

32

PLANT CLASSIFICATION INFORMATION DB

$\begin{bmatrix} \text{PUBLIC WEATHER DATA} \end{bmatrix}$

$\begin{bmatrix} \text{DAILY MAXIMUM AIR TEMPERATURE} \\ \text{DAILY MINIMUM AIR TEMPERATURE} \end{bmatrix}$ — S1001

$\begin{bmatrix} \text{SET NIGHT TEMPERATURE} \\ \text{(AVERAGE)} \end{bmatrix}$

S1101

DAILY MINIMUM AIR TEMPERATURE ≥ SET NIGHT TEMPERATURE (AVERAGE)?  — No

Yes

$\begin{bmatrix} \text{NIGHTTIME DEGREE HOUR (1)} \end{bmatrix}$ — S1102

S1103

$\frac{7}{12}$ × DAILY MAXIMUM AIR TEMPERATURE + $\frac{5}{12}$ × DAILY MINIMUM AIR TEMPERATURE > SET NIGHT TEMPERATURE (AVERAGE)?  — No

Yes

S1104 — $\begin{bmatrix} \text{NIGHTTIME DEGREE HOUR (2)} \end{bmatrix}$

S1105 — $\begin{bmatrix} \text{NIGHTTIME DEGREE HOUR (3)} \end{bmatrix}$

FIG. 12

[ PUBLIC WEATHER DATA ]

$$\begin{bmatrix} \text{DAYTIME INDOOR SET TEMPERATURE} \\ - \text{ OUTSIDE AIR TEMPERATURE } - \\ \text{INDOOR SOLAR HEAT EFFECT TEMPERATURE} \end{bmatrix} \sim \text{S1203}$$

$$\text{S1005} \sim \begin{bmatrix} \text{DAILY NIGHTTIME HEATING LOAD} \end{bmatrix}$$

$$\begin{bmatrix} \text{DAILY DAYTIME HEATING LOAD} \end{bmatrix} \sim \text{S1201}$$

$$\begin{bmatrix} \text{DAILY PERIODIC HEAT LOAD} \end{bmatrix} \sim \text{S1202}$$

$$\begin{bmatrix} \text{PERIODIC HEAT LOAD} \end{bmatrix} \sim \text{S1007}$$

FIG. 13

S1007 ⎡ PERIODIC HEAT LOAD (= REQUIRED HEAT QUANTITY)
(EXAMPLE: ANNUAL PERIODIC HEAT LOAD = 1734.57 GJ) ⎤

S1302 ⎡ DIVIDED BY HEATING EFFICIENCY (EXAMPLE: 0.9)
(EXAMPLE: 1927.30 GJ) ⎤

⎡ A HEAVY OIL ⎤ → ⎡ EMISSION FACTOR
(0.0189) ⎤

S1303

S1301 ⎡ GREENHOUSE EFFECT GAS
EMISSION AMOUNT
133.56 t ⎤

# INTERNATIONAL SEARCH REPORT

| | International application No. |
|---|---|
| | **PCT/JP2023/044183** |

## A. CLASSIFICATION OF SUBJECT MATTER

*A01G 9/14*(2006.01)i; *G06Q 50/02*(2024.01)i
FI: A01G9/14 Z; G06Q50/02

According to International Patent Classification (IPC) or to both national classification and IPC

## B. FIELDS SEARCHED

Minimum documentation searched (classification system followed by classification symbols)

A01G9/14; G06Q50/02

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

## C. DOCUMENTS CONSIDERED TO BE RELEVANT

| Category* | Citation of document, with indication, where appropriate, of the relevant passages | Relevant to claim No. |
|---|---|---|
| A | 立松宏一ら. 北海道における農業用温室を対象とした施設内環境解析及び構造形式に関する研究. 調査研究報告,No.376,地方独立行政法人北海道立総合研究機構. [online], published March 2017 [retrieved on 15 January 2024], Internet: <URL: https://www.hro.or.jp/upload/22993/376.pdf>, (TATEMATSU, Koichi et al. Study on thermal environment analysis and structural strength for greenhouse in Hokkaido. Research Report No. 376, Local Independent Administrative Agency Hokkaido Research Organization.) pp. 7-33 | 1-25 |
| A | JP 2013-221772 A (INTEGRAL KK) 28 October 2013 (2013-10-28) paragraphs [0023]-[0103] | 1-25 |
| A | 山本雄二郎. ハウスの放熱係数について. 農業気象. December 1970, vol. 26, no. 3, pp. 117-122, (YAMAMOTO, Yujiro. On the Heat Loss Coefficient of Plastic Greenhouse. Journal of Agricultural Meteorology.) pp. 117-121 | 1-25 |

☑ Further documents are listed in the continuation of Box C.  ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **12 January 2024** | **27 February 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

## INTERNATIONAL SEARCH REPORT

International application No.

**PCT/JP2023/044183**

### C. DOCUMENTS CONSIDERED TO BE RELEVANT

| Category* | Citation of document, with indication, where appropriate, of the relevant passages | Relevant to claim No. |
|---|---|---|
| A | 大橋慎太郎ら. 積雪寒冷地域のハウス栽培における放熱機構の解析. 農業施設. 2005, vol. 36, no. 1, pp. 37-45, (OHASHI, Shintaroh, NAKANO, Kazuhiro. Analysis of Greenhouse Heat-releasing Mechanisms in Snowy and Cold Areas. Journal of the Society of Agricultural Structures, Japan.) <br> pp. 37-43 | 1-25 |

Form PCT/ISA/210 (second sheet) (July 2022)

## INTERNATIONAL SEARCH REPORT
### Information on patent family members

International application No.

**PCT/JP2023/044183**

| Patent document cited in search report | Publication date (day/month/year) | Patent family member(s) | Publication date (day/month/year) |
|---|---|---|---|
| JP 2013-221772 A | 28 October 2013 | (Family: none) | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 3236723 A

**Non-patent literature cited in the description**

- Tomato grows more and more rapidly with CO2! What is the latest technology of killing three birds with one stone?. *ENERGY FRONTLINE*, 13 April 2021, vol. 25, https://ene-fro.com/article/ef195_a1

- **MAKIO HAYASHI** ; **TOYOKI KOZAI**. Comparison of Actual and Calculated Heating Degree Hours and a Proposition of Heating Degree Hour Diagram. *Journal of Agricultural Meteorology (J. Agr. Met.)*, 1982, vol. 38 (1), 29-36